# EUROPEAN PATENT SPECIFICATION

(11) **EP 2 258 084 B1**
(45) Date of publication and mention of the grant of the patent: **06.06.2012**
(21) Application number: 08716401.8
(22) Date of filing: 10.03.2008
(51) Int. Cl.: H04L 12/56

(54) **TECHNIQUE FOR CLASSIFYING NETWORK TRAFFIC AND FOR VALIDATING A MECHANISM FOR CALASSIFYING NETWORK TRAFFIC**
TECHNIK ZUM KLASSIFIZIEREN VON NETZWERKVERKEHR UND ZUM VALIDIEREN EINES MECHANISMUS ZUM KLASSIFIZIEREN VON NETZWERKVERKEHR
TECHNIQUE POUR CLASSIFIER UN TRAFIC RÉSEAU ET POUR VALIDER UN MÉCANISME DE CLASSIFICATION DE TRAFIC RÉSEAU

(43) Date of publication of application: 08.12.2010
(73) Proprietor: Telefonaktiebolaget L M Ericsson (PUBL), 164 83 Stockholm (SE)
(72) Inventor: MALOMSOKY, Szabolcs, H-2000 Szentendre (HU); ORINCSAY, Daniel, H-1143 Budapest (HU); SZABO, Géza, H-6000 Kecskemet (HU)
(74) Representative: Mohsler, Gabriele
(86) International application number: PCT/EP2008/001891
(87) International publication number: WO 2009/112044

(56) References cited:
- WO-A-00/76230
- US-A1- 2004 022 191

## Description

### Technical Field

The invention generally relates to the field of network traffic classification. In particular, the invention relates to a mechanism for classifying network traffic by means of including at least one application identifier in an analyzed data packet of a data flow. The invention also relates to validating a mechanism for classifying network traffic.

### Background

The amount of network traffic transmitted in communication networks is steadily increasing. One reason for this increase is the rising popularity of applications requiring a high network bandwidth, e.g. video download applications, media streaming applications or Peer-to-Peer (P2P) file sharing applications.

Network operators and developers of communication networks and network related software have an interest to know how the network traffic associated with particular applications is distributed. For this purpose, the network traffic needs to be classified. The resulting information may be used for network management tasks such as flow prioritization, traffic shaping or diagnostic monitoring. Thus, classifying network traffic has the aim to accurately identify and categorise network traffic according to the type of application which has generated the network traffic.

Passive and active methods for classifying network traffic are known. Passive methods for classifying network traffic are based on passive measurements of network traffic such as e.g. associating a monitored port number with an application or only monitoring specific byte patterns in data packets of network traffic. However, such passive methods for classifying network traffic have the disadvantage that the classification accuracy varies, for example, depending on the kind of application that has generated the network traffic, so that the overall classification accuracy is often not satisfying.

Active methods for classifying network traffic are based on active traffic measurements. However, known active methods for classifying network traffic have the disadvantage that they do not capture all relevant network traffic and therefore do not provide accurate network traffic classification results. Moreover, many active methods for classifying network traffic cannot be used in actively operating communication networks since the flow of network traffic would be deteriorated, and they additionally require a high amount of processing power.

A further disadvantage of known methods for classifying network traffic is the fact that there is no reliable technique for validating such methods available. Usually, the accuracy of a known method for classifying network traffic is validated by means of another known method for classifying network traffic. However, the accuracy of the other known method for classifying network traffic, which acts as a sort of reference method, is often likewise not known.

Document WO 00/76230 relates to a method to control the PDP context of a data packet and a mobile station to realize the method. The mobile station comprises a control element, which controls the classification of a data packet to be sent to a PDP context on basis of a first and a second identifier. The first identifier indicates the application that has created the data packet and the second identifier indicates a separate data flow of the application. The classification process is simplified and thus better suited to a mobile station with limited performance capacity.
This document concerns a situation in which the received data packet already includes the first identifier to identify the application and fails to disclose the analyzing of the received data packets.

Document US 2004/022191 relates to a system and method that enables network quality of service to be based on qualitative factors. RSVP signaling is extended to allow RSVP messages to be identified as qualitative, and to pass qualitative information with the messages. RSVP-aware network devices such as routers in the message path analyze the qualitative information and apply policy based thereon to perform admission control and allocation of resources based on qualitative factors.

Document US 2007/0204036 relates to techniques for creating policies for use in policy-based management of quality of service treatments of network data traffic flows are described. Policies are defined based on information about types of flows generated by an application and quality of service functions that are available in the network. Application information is received that defines flows generated by an application, including points where the application generates the traffic flows. QoS information is received that defines one of more quality of service treatments that the network device may apply to data processed by the network device. Based on the information, processing policies that associate the flows with the QoS treatments are determined. Mappings of the application information to the QoS treatments, which may be used to generate the quality of service value when the application program generates flows, are created and stored. Thus, the policies are informed both by application expertise and network expertise. This document does not concern about the validation of the classification of flows at all.

### Summary

Accordingly, there is a need for a technique for classifying network traffic and a technique for validating a mechanism for classifying network traffic which avoid at least some of the disadvantages outlined above.

This need is satisfied according to a first aspect by a method for classifying network traffic in the form of data packets generated by multiple applications installed on a device. The method as performed by the device comprises the steps of receiving data packets belonging to one or more data flows, each data flow including the data packets generated by a specific one of the multiple applications, analyzing the received data packets to identify the application associated with each analyzed data packet, and classifying at least one data flow by including an application identifier in at least one of the data packets of this data flow. The network traffic may be any kind of packet-based network traffic which is capable of being transmitted within a communication network.

The analyzing of the received data packets and the classifying of the at least one data flow may be performed in a protocol layer below an Internet Protocol (IP) layer, i.e. logically close to the network interface of the device. Since all network traffic to be transmitted to and received from the communication network has to pass through the network interface of the device, all network traffic can be captured and classified and no network traffic gets lost.

The analyzing of the received data packets and the classifying of the at least one data flow may be performed by a kernel of an operating system of the device. The kernel can directly execute instructions and reference memory addresses without any control by the operating system. Therefore, the analyzing and classifying may be performed in a time-optimized manner.

The analyzing of the received data packets and the classifying of the at least one data flow may be performed by means of at least one network driver component. The network driver component may be a network driver responsible for transmitting data packets associated with a specific network protocol. By executing the steps of analyzing the received data packets and classifying the at least one data flow by means of a network driver component, the network traffic transmission tasks, i.e. the transmission rate, of the device are not adversely affected.

The device may be a terminal device. The terminal device may be any kind of communication device which is capable of sending network traffic within a communication network, e.g. a mobile telephone or a personal computer. However, the device may as well be an intermediate network element (such as a router or gateway) on which a plurality of applications is installed. The device does not necessarily have to support receipt of network traffic.

The multiple applications may be terminal-specific applications. The multiple application may comprise at least one of a P2P application, e.g. BitTorrent, eDonkey, Gnutella or DirectConnect, a Voice over Internet Protocol (VoIP) application, e.g. Skype, a chat application, e.g. Microsoft Network (MSN) Live, a file transfer application, e.g. a File Transfer Protocol (FTP) application, an e-mail application, a Secure Shell (SSH) -based application, a Session Control Protocol (SCP) -based application, a gaming application, e.g. a First-Person Shooter (FPS) or a Massively Multiplayer Online Role Playing Game (MMORPG) application, and a streaming application, e.g. streaming radio, streaming video or web based streaming.

According to one aspect, the method comprises the further steps of determining whether a received data packet is an outgoing or an incoming data packet and excluding the received data packet at least from the classifying step in case the data packet is an incoming data packet. Since the method for classifying network is directed at classifying network traffic generated by multiple applications installed on the device, only outgoing data packets of the device may be considered for the classifying of the at least one data flow.

According to another aspect, the method further comprises the steps of determining the size of a received data packet and excluding the data packet at least from the classifying in case its size exceeds a predetermined value. In one implementation, the predetermined value depends on the size of a Maximum Transferable Unit (MTU). The MTU defines the largest size of a data packet that a network interface can transmit without the need to fragment the data packet. In case the size of the at least one received data packet equals (or almost equals) the size of the MTU, an extension of the at least one received data packet with the application identifier would lead to a fragmentation of the data packet. To avoid this, only those received data packets may be considered for classifying, whose size is smaller than the MTU decreased by the size of the application identifier.

According to still another aspect, the method further comprises the steps of determining a network protocol with which a received data packet is associated and excluding the data packet at least from the classifying step in case the data packet is not associated with at least one predetermined network protocol. The at least one predetermined network protocol may be any kind of network protocol, e.g. the Transmission Control Protocol (TCP). By means of these method steps, classification of network traffic may be limited to network traffic which is associated with a certain kind of network protocol. This may be useful if only a specific type of network traffic is desired to be classified.

The analyzing step may further comprise the steps of assessing a data flow-specific identifier associated with the received data packet and determining, based on the data flow-specific identifier, whether information regarding the application that has generated the analyzed data packet is available in a local memory. Since each data flow only comprises data packets generated by the same application, a data flow-specific identifier may internally be associated within the device with the application that has generated the analyzed data packet. The data flow-specific identifier may for example (also) be included in the received data packet. The data flow-specific identifier may be a multi-tuple identifier, e.g. a five-tuple identifier including a source IP address, a destination IP address, a source port number, a destination port number and a transport protocol.

In case information regarding the application that has generated the analyzed data packet is available in the local memory, such information does not have to be requested from the operating system. Since such a request to the operating system is resource consuming and cannot be executed when the device is transmitting data packets at a high transmission rate, avoiding this request prevents adverse affection of the performance of the device.

In order to directly and in a fast manner access the information stored in the local memory with regard to the application that has generated the analyzed data packet, the information may be coded by means of a hash function. The hash function transforms the information into a smaller amount of data that serves as a digital "fingerprint" of the information and that may be accessed by means of this fingerprint.

According to a further aspect, the method may further comprise the step of requesting at least one of a network number (or address), e.g. an IP address, and a process ID associated with the analyzed data packet in case no information regarding the application that has generated the analyzed data packet is available in the local memory. In case no such information is available in the local memory, the information may be requested from the operating system of the device. The network number or process ID may be used to provide an association with the application that has generated the analyzed data packet.

The step of including the application identifier in at least one of the analyzed data packets of the data flow may comprise at least one of including application identifiers in all analyzed data packets of the data flow, including an application identifier only in the first analyzed data packet of the data flow, and randomly including application identifiers in analyzed data packets of the data flow. It is also possible to exclude the step of including an application identifier in at least one of the analyzed data packets for a specific application. As regards the option of randomly including application identifiers in analyzed data packets of the data flow, it is also possible that an application identifier is always or never included in the first analyzed data packet of the data flow.

The application identifier may be included in an option field of the analyzed data packet, and the option field may be transparent within the network. For example, the application identifier may be included in the Router Alert Option field of the data packet. The existence of the Router Alert Option field is transparent within the communication network, i.e. for the routers in the transmission path and also for the receiver host. The Router Alert Option field is explained in detail in specification RFC 2113 "IP router alert option" by the Network Working Group, which is hereby incorporated by reference in its entirety. Other option fields of the analyzed data packet may of course as well be used. The inclusion of the application identifier may be in conformity with the security policy of the communication network. Otherwise, the included application identifier may be removed by e.g. an edge router at the boarder of an access network.

In one implementation, the application identifier is derived from an executable file name of the application. For example, the first two characters of the corresponding executable file name of the application may be added in the option field of the analyzed data packet (accordingly, the characters "sk" may be included for a Skype application). In this case, the size of the data packet is increased by four bytes.

Since the value of the packet size field in an IP header of the analyzed data packet is increased after including an application identifier into it, a cyclic redundancy check field of a header of the analyzed data packet may be recalculated.

According to a further aspect, a method of validating a mechanism for classifying network traffic is provided. The method comprises the steps of receiving at least one data flow of the network traffic, the data flow comprising data packets and at least one of the data packets of the data flow including an application identifier assigned to the data flow in accordance with a first mechanism for classifying network traffic, the application identifier classifying the data flow with respect to an application that has generated the data flow, analyzing at least one of the data packets of the received data flow in order to determine a first classification of the data flow based on an application identifier included in the analyzed data packet, providing a second classification of the data flow by means of a second mechanism for classifying network traffic that is different from the first mechanism for classifying network traffic and validating the second classification mechanism for classifying network traffic by comparing the first and the second classification of the network traffic.

Network traffic is classified by the first classification mechanism and the second classification mechanism. The second classification mechanism may thus be validated by means of the first classification mechanism. The first classification mechanism may be independent from the second classification mechanism and may represent a sort of reference mechanism for the second classification mechanism. Therefore, by comparing the first and the second classifications of the network traffic, the second classification mechanism may be validated, i.e. its accuracy may be determined. As an example, the first classification mechanism is based on the present (active) technique for classifying network traffic and the second classification mechanism traffic is based on a passive method for classifying network traffic.

The techniques presented herein can be practiced in the form of hardware, in the form of software and in the form of a combined hardware/software approach. As for a software aspect, a computer program product is provided. The computer program product comprises program code portions for performing one or more of the steps of the methods and techniques described above when the computer program product is run on one or more components of a network. The computer program product may be stored on a computer readable recording medium.

As for a hardware aspect, a device (e.g. a terminal device) for classifying network traffic in the form of data packets generated by multiple applications installed on the device is provided. The device comprises a function for receiving data packets belonging to one or more data flows, each data flow including the data packets generated by a specific one of the multiple applications, a function for analyzing the received data packets to identify the application associated with each analyzed data packet, and a function for classifying at least one data flow by including an application identifier in at least one of the analyzed data packets of this data flow. Each function may be realized as a hardware or software module

The device may further comprise a network driver component. The network driver component may comprise the function for analyzing the received data packets and the function for classifying at least one data flow. In one implementation, the function for analyzing the received data packets and the function for classifying at least one data flow are included in a protocol layer below an IP layer.

According to a further hardware aspect, an apparatus for validating a mechanism for classifying network traffic is provided. The apparatus comprises a function for receiving at least one data flow of the network traffic, the data flow comprising data packets and at least one of the data packets of the data flow including an application identifier assigned to the data flow in accordance with a first mechanism for classifying network traffic, the application identifier classifying the data flow with respect to an application that has generated the data flow, a function for analyzing at least one of the data packets of the at least one received data flow in order to determine a first classification of the data flow based on an application identifier included in the analyzed data packet, a function for providing a second classification of the data flow by means of a second mechanism for classifying network traffic that is different from the first mechanism for classifying network traffic and a function for validating the second classification mechanism for classifying network traffic by comparing the first and the second classifications.

In one implementation, the function for receiving at least one data flow, the function for analyzing at least one of the data packets, the function for providing a second classification of the data flow and the function for validating the second classification mechanism are included in a single network element, e.g. a network node.

### Brief Description of the Drawings

In the following, the invention will be described with reference to exemplary embodiments illustrated in the drawings, wherein
- Fig. 1: is a schematic block diagram illustrating a device for classifying network traffic within a communication network;
- Fig. 2: is a flow chart illustrating a first method embodiment for classifying network traffic;
- Fig. 3: is a flow chart illustrating a second method embodiment for classifying network traffic;
- Fig. 4: is a schematic block diagram illustrating a communication network including apparatus embodiments;
- Fig. 5: is a diagram illustrating a data packet in which an application identifier has been included;
- Fig. 6: is a schematic block diagram illustrating an apparatus for validating a mechanism for classifying network traffic;
- Fig. 7: is a flow chart illustrating a method embodiment of a method for validating a mechanism for classifying network traffic;
- Fig. 8: is a diagram illustrating an exemplary distribution of network traffic; and
- Fig. 9: is a diagram illustrating a comparison of two different network traffic classifications.

### Description of Preferred Embodiments

In the following, for purposes of explanation and not limitation, specific details are set forth, such as particular sequences of steps, interfaces and configurations, in order to provide a thorough understanding of the present invention. It will be apparent to one skilled in the art that the present invention may be practiced in other embodiments that depart from these specific details.

Moreover, those skilled in the art will appreciate that the functions and processes explained herein below may be implemented using software functioning in conjunction with a programmed microprocessor or with general purpose computers. It will also be appreciated that while the embodiments are primarily described in the form of methods and apparatuses, the invention may also be embodiment in a computer program product as well as in a system comprising a computer processor and a memory coupled to the processor, wherein the memory is encoded with one or more programs that may perform the functions disclosed herein.

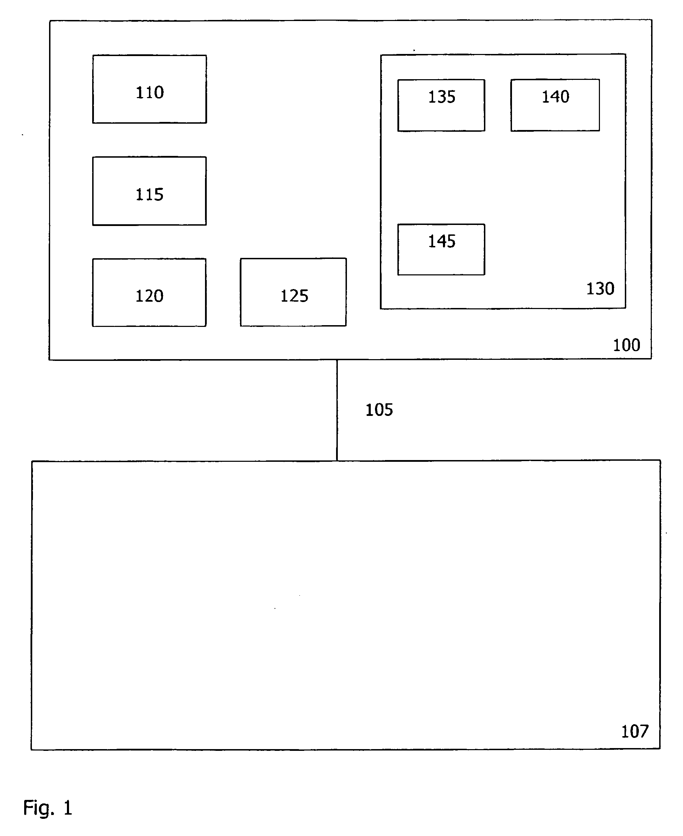

Fig. 1 shows a schematic block diagram illustrating an embodiment of a device for classifying network traffic within a communication network.

The device 100 is a terminal device, e.g. a mobile telephone or a personal computer. The terminal device 100 is communicating via a communication link 105 with network router 107. Communication link 105 is a fixed or wireless communication link. Three terminal specific applications 110, 115 and 120 are installed on the terminal device 100. For example, application 110 is an e-mail application, application 115 is a P2P application and application 120 is a streaming application. The terminal device 100 further comprises a local memory 125 (e.g. a cache memory) and a network driver component 130.

Each of the applications 110, 115 and 120 generates a specific data flow in the form of data packets. The plurality of data flows, when sent towards the network router 107, constitute network traffic. Before being transmitted via communication link 105 to network router 107, the data packets pass network driver component 130.

Network driver component 130 is a network driver which is responsible for transmitting data packets associated with a specific network protocol. Network driver component 130 is logically located close to a network interface of the terminal device 100, i.e. a network interface which is providing access to the communication network including network router 107. Therefore, all data packets generated by applications 110, 115 and 120 have to pass network driver component 130 before being transmitted over communication link 105.

Network driver component 130 comprises an interface function 135 for receiving data flows generated by applications 110, 115 and 120. Each data flow includes the data packets generated by a specific one of the applications 110, 115 and 120. Furthermore, network driver component 130 comprises a function 140 for analyzing the received data packets and a function 145 for classifying at least one data flow.

The function 140 for analyzing the received data packets analyzes each data packet received by function 135 in order to identify the application associated with the data packet. The analyzing within function 140 comprises the steps of determining whether a received data packet is an outgoing or an incoming data packet, determining the size of the received data packet and determining a network protocol with which the data packet is associated. By means of determining whether a received data packet is an outgoing or an incoming data packet, incoming data packets can be excluded from further analyzing. Furthermore, by means of determining the size of the received data packet, data packets exceeding a predetermined size can be excluded from further analyzing. Thereby, fragmentation of data packets can be avoided. Additionally, by means of determining a network protocol with which the data packet is associated, data packets which are not associated with a predetermined network protocol may be excluded from further analyzing.

In case a received data packet is not excluded from further analyzing during the above mentioned analyzing steps, it is determined by function 140 whether information regarding the application that has generated the analyzed data packet is available in the local memory 125. In case such information is available in the local memory 125, the information is retrieved from the local memory 125.

In case no such information is available in the local memory 125, the information is requested by function 140 from the operating system (not shown in Fig. 1) of the terminal device 100. When function 140 has the information regarding the application that has generated the analyzed data packet available, function 145 determines whether an application identifier actually is to be included in the analyzed data packet.

Each application identifier is associated with and uniquely identifies the application 110, 115, 120 that has generated the data flow. The application identifier is derived from an executable file name of the application. In the present embodiment, application identifiers are only included in the first analyzed data packet of each data flow. In case the received (function 135) and analyzed (function 140) data packet is the first analyzed data packet of the data flow, function 145 includes the respective application identifier in the data packet. However, no application identifiers are included in the following data packets of the data flow.

The application identifier is included in the Router Alert Option field of the data packet. After the application identifier has been included in the Router Alert Option field of the data packet, a cyclic redundancy check field of a header of the analyzed data packet is recalculated. Thereafter, the data packet is transmitted via communication link 105 to network router 107. Network router 107 then transmits the data packet within a communication network, such as the Internet.

Therefore, at least one data packet of each data flow includes an application identifier. Hence, it may be determined within the network (e.g. by network router 107) how the network traffic generated by terminal device 100, i.e. applications 110, 115 an 120, is distributed. Thus, a classification of the network traffic generated by terminal device 100 can be provided.

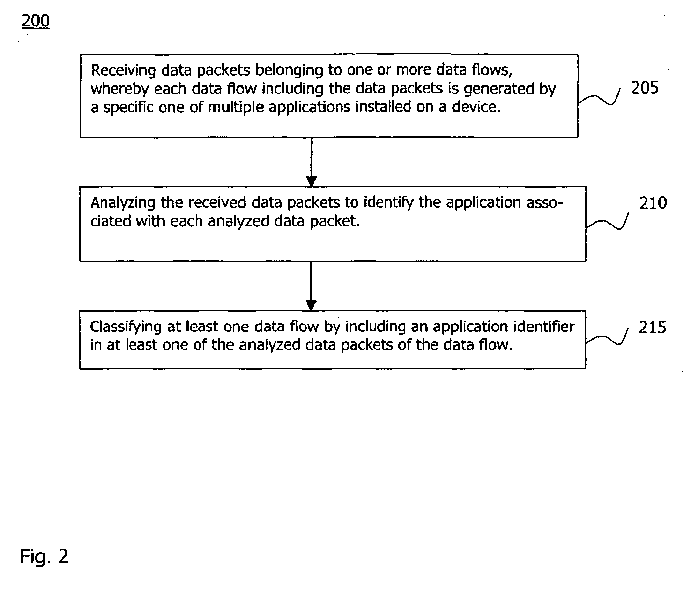

Fig. 2 shows a flow chart illustrating a first method embodiment for classifying network traffic. The method embodiment relates to classifying network traffic in the form of data packets generated by multiple applications installed on a device. The method 200 may be practised by the device 100 shown in Fig. 1. In particular, the method may be practiced by the network driver component 130 shown in Fig. 1. The method may as well be practiced by other apparatuses.

The method starts in step 205 with receiving data packets belonging to one or more data flows. Each data flow includes data packets generated by a specific one of multiple applications installed on the device. The multiple applications may be terminal-specific applications.

In a next step 210, the received data packets are analyzed in order to identify the application associated with each analyzed data packet. During analyzing step 210, it is determined whether (and which) application identifiers are to be included into specific data packets. If it is determined that application identifiers are to be included into specific data packets, an application identifier is included in step 215 in at least one of the analyzed data packets of this data flow.

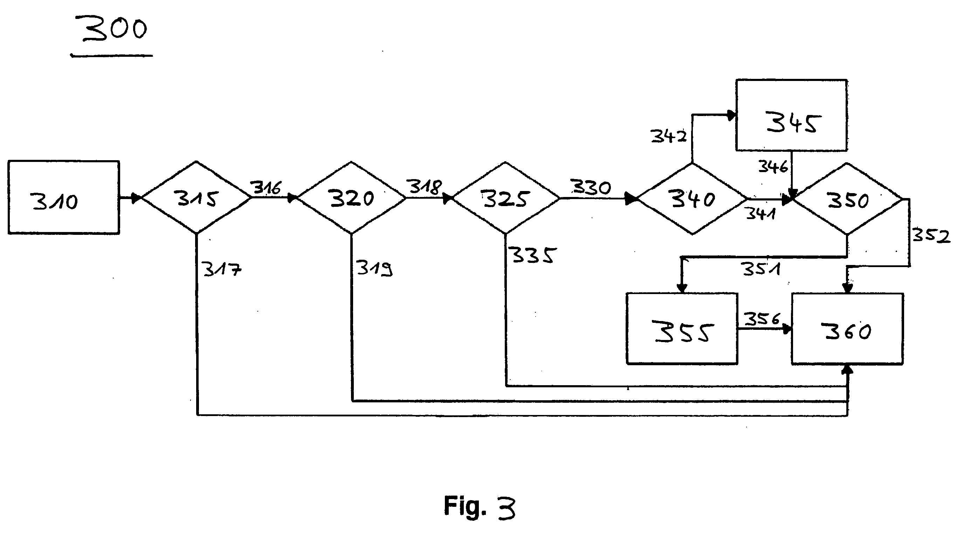

Fig. 3 shows a second method embodiment for classifying network traffic that may also be combined with method 200 shown in Fig. 2. As shown therein, the method 300 starts with receiving data packets belonging to one or more data flows 310. Each data flow includes data packets generated by a specific one of multiple terminal applications. The data packets may for example be generated by applications 110, 115, 120, as shown in Fig. 1.

Subsequent to step 310, at least one of the received data packets is analyzed. In particular, in step 315 it is analyzed whether the received data packet is an incoming or an outgoing data packet. In case the received data packet is an incoming data packet, the data packet is excluded from including an application identifier into it and is sent to the communication network, as indicated by arrow 317.

In case the received data packet is an outgoing data packet, the method proceeds to step 320, as indicated by arrow 316. In step 320, the size of the received data packet is determined. In case the size of the received data packet (optionally including the size of an application identifier) exceeds a predetermined data packet size, the data packet is excluded from including an application identifier into it. Hence, the data packet is sent to the communication network, as indicated by arrow 319. For example, the predetermined data packet size may depend on the MTU.

In case the data packet does not exceed the predetermined data packet size, the method continues with subsequent method step 325, as indicated by arrow 318. In method step 325, the network protocol is determined, with which the received data packet is associated. In case the received data packet is not associated with at least one predetermined network protocol, e.g. TCP or the User Datagram Protocol (UDP), the data packet is excluded from any inclusion of an application identifier into it. In this case, the data packet is sent to the communication network, as indicated by arrow 335.

In case the received data packet is associated with a predetermined network protocol, the method proceeds to step 340, as indicated by arrow 330. In method step 340, it is determined by means of a data flow-specific identifier of the data packet, whether information regarding the application that has generated the received data packet is available in a local memory of the device. The local memory may for example be the memory 125 of terminal device 100 shown in Fig. 1.

In case information regarding the application that has generated the received data packet is not available in the local memory, the method proceeds to step 345, as indicated by arrow 342. In step 345, the required information is requested from the operating system of the device. For example, the device may request a network number and/or a process ID associated with the received data packet from the operating system. The process ID is associated locally within the device with the application that has generated the received data packet. Thus, in step 345, the application that has generated the received data packet is determined in case no such information is available in the local memory 125. After the information has been obtained, the method proceeds to step 350, as indicated by arrow 346.

In case information regarding the application that has generated the received data packet is available in the local memory 125, this information is retrieved and the method directly proceeds from step 340 to step 350, as indicated by arrow 341. In step 350, it is determined whether an application identifier actually has to be included in the received data packet. For example, instead of including application identifiers in all received data packets, it may be intended that application identifiers are only included in the first analyzed data packet of a data flow. Alternatively, application identifiers may be randomly included in received data packets of the data flow. Depending on whether an application identifier has to be included in the received data packet or not, the method proceeds to step 355 or step 360.

In case an application identifier has to be included in the data packet, the method continues with step 355, as indicated by arrow 351. In step 355, an application identifier is included in an option field of the data packet. After the inclusion of the application identifier in the received data packet in step 355, the method proceeds to step 360. In step 360, the received data packet is sent to the communication network, as indicated by arrow 356.

In case it has been determined in step 350 that no inclusion of an application identifier into the data packet is necessary, the method proceeds from step 350 to step 360, i.e. the sending of the received data packet to the communication network, as indicated by arrow 352.

Hence, application identifiers are included in at least one data packet of each data flow. Therefore, the network traffic generated by applications installed on a device is classified.

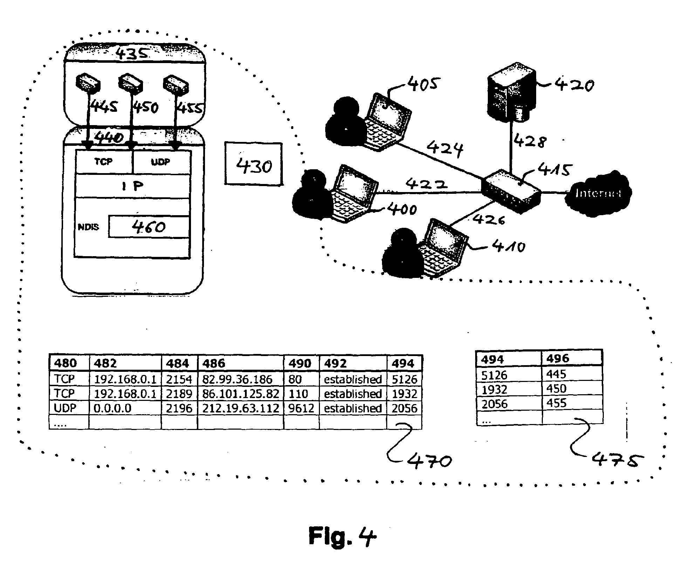

Fig. 4 shows a schematic block diagram illustrating a communication network including apparatus embodiments.

The communication network comprises personal computers or similar terminal devices 400, 405 and 410, a network router 415 and a network element 420. Personal computer 400 is communicating via communication link 422 with network router 415, personal computer 405 is communicating via communication link 424 with network router 415 and personal computer 410 is communicating via communication link 426 with network router 415. Furthermore, network element 420 is communicating via communication link 428 with network router 415. Communication links 424, 425, 426 and 418 may be wired or wireless links. Network router 415 also provides access to the Internet.

As can be seen from the schematic elements within the dotted line, personal computer 400 comprises a local memory 430, a plurality of applications on an application layer 435 and a network driver 460 within a protocol stack 440. The plurality of applications include an Internet Explorer application 445, an Outlook e-mail application 450 and a Skype VoIP application 455. The applications 445, 450 and 450 generate network traffic in the form of data packets belonging to one or more data flows. The data packets pass network driver 460 included in protocol stack 440 before being sent via communication link 422 to network router 415. Network driver 460 enables transmission of the data packets to network router 415. In one variant, the functions of the network driver 460 may be executed by the kernel of the operating system of personal computer 400.

As shown in the protocol stack 440 of personal computer 400, the personal computer 400 only supports the network protocols TCP and UDP. Below an IP layer, a Network Driver Interface Specification (NDIS) library is located. The NDIS library provides an Application Programming Interface (API) with which the network driver 460 has been programmed. Network driver 460 is a Microsoft Windows XP driver, in particular a NDIS hook driver, and is located in a layer below the IP layer. Furthermore, the network driver 460 is logically located close, i.e. directly before, the network interface (not shown in Fig. 4) which is enabling transmission of the data packets via communication link 422 to network router 415.

Before being transmitted to network router 426, the data packets received from the multiple applications 445, 450, 455 are analyzed by network driver 460. The analyzing may be based on the methods shown in Figs. 2 and 3. During analyzing, the network driver 440 determines whether information regarding the application 445, 450, 455 that has generated the analyzed data packet is available in the local memory 430. In case the information is available in local memory 430, network driver 460 retrieves this information from local memory 430.

Fig. 4 shows a first look-up table 470 and a second look-up table 475 which may be stored in the local memory 430 and which may be used to associate data packets and local applications. The first look-up table 470 includes associations between five-tuple identifiers 480, 482, 484, 486, 490 and process IDs 494. Each line of the first look-up table 470 relates to one established network connection and shows a five-tuple identifier 480, 482, 484, 486, 490, the state of the network connection 492 and a process ID 494. Each five-tuple identifier consists of a data protocol field 480, a source address field 482, a source port field 484, a destination address field 486 and a destination port field 490. The second look-up table 475 includes associations between process IDs 494 and executable file names of applications 496.

By means of the five-tuple identifier 480, 482, 484, 486, 490, network driver 460 can determine for a specific analyzed data packet an associated process ID 494 from the first look-up table 470. For example, network driver 460 can determine that a data packet having a five-tuple identifier with a data protocol field 480 "TCP", a source address field 482 "192.168.0.1", a source port field 484 "2154", a destination address field 486 "82.99.36.186" and a destination port field 490 "80" is associated with the process ID 5126.

Thereafter, network driver 460 can determine by means of the second look-up table 475 that process ID 5126 is associated with the Internet Explorer Application 445. Hence, network driver 460 obtains the information that the analyzed data packet has been generated by the Internet Explorer Application 445.

The data included in the first look-up table 470 and/or the second look-up table 475 may be accessed by means of a fingerprint of the data generated by a hash function (not shown in Fig. 4). The hashing approach accelerates the look-up operations.

In case no information regarding the application that has generated the data packet is available in the local memory 430, the information is requested from the operating system of the personal computer 400. For this, network driver 460 requests a process ID for the analyzed data packet from the operating system. The process ID may be requested by means of a five-tuple identifier of the analyzed data packet. With the process ID, network driver 460 can look-up the associated application, i.e. the application that has generated the analyzed data packet, in the second look-up table 475.

After the information regarding the application that has generated the data packet is available in network driver 460, the network driver 460 includes an application identifier in at least one data packet of the data flow. Thereafter, a cyclic redundancy check field of a header of the analyzed data packet including the application identifier is recalculated. Subsequently, the data packet is sent via communication link 422 to network router 415.

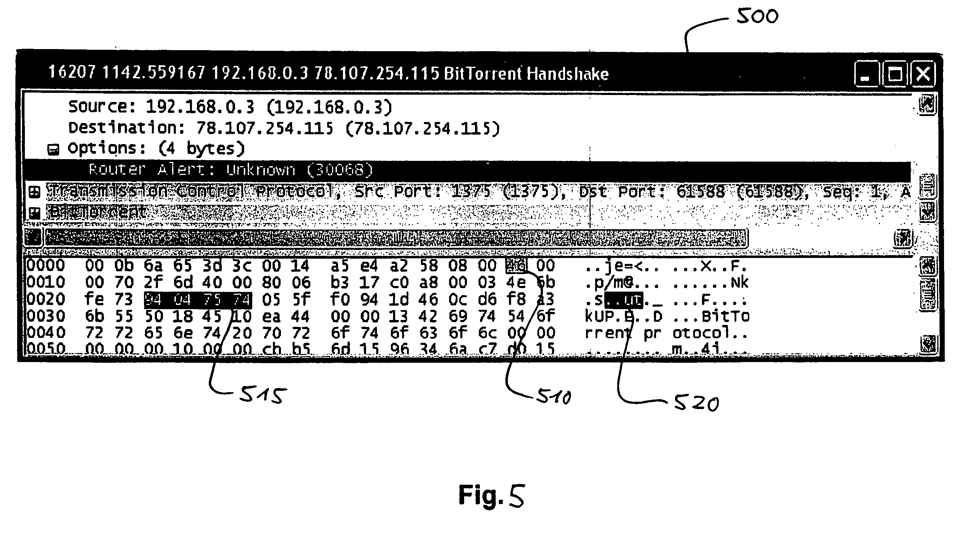

Fig. 5 shows a diagram illustrating an exemplary data packet, in particular a screen shot of a data monitor 500 showing a data packet, in which an application identifier has been included based on the approach discussed above in context with Fig. 4. The data packet is associated with TCP and has been generated by an uTorrent BitTorrent application. The IP header 510 shows the increased size of the data packet. The increased size is 46 byte, whereas the size without the included application identifier was 45 byte.

The application identifier has been included in the Router Alert Option Field 515 of the data packet. The Router Alert Option Field 515 includes the first two characters of the application that has generated the data packet, i.e. "ut" for the uTorrent BitTorrent application, as shown in field 520.

In Fig. 4, the same network component 460 for analyzing received data packets and including application identifiers associated with at least one of multiple applications which have generated the data packets may as well be included in personal computers 405 and 410. Moreover, personal computers 405 and 410 may also comprise a plurality of applications generating network traffic. Hence, network traffic generated by applications installed on personal computers 400, 405 and 410 may be classified.

Although only three personal computers 400, 405, 410 are shown in Fig. 4, a plurality of further personal computers, each including network driver 460, may be connected to the communication network.

Network element 420 has access to all classified data packets sent from personal computers 400, 405, 410 to network router 415. Network element 420 may analyze the data packets and may provide an overall classification of the network traffic generated by personal computers 400, 405, 410.

Network element 420 may be capable of validating a further mechanism for classifying network traffic by means of the above described mechanism for classifying network. For this, network element 420 may classify the same network traffic generated by personal computers 400, 405 and 410 by means of another mechanism for classifying network traffic and thereafter compare the classification results.

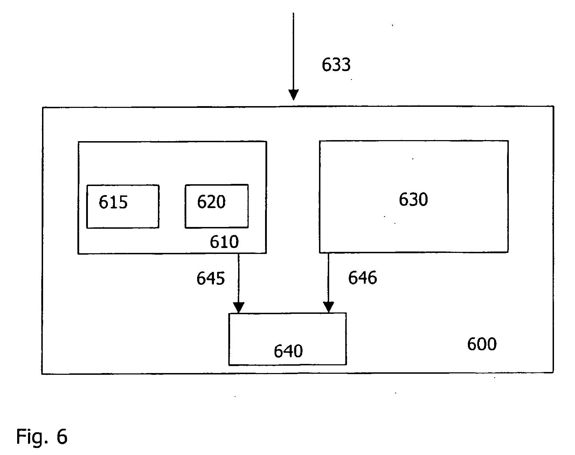

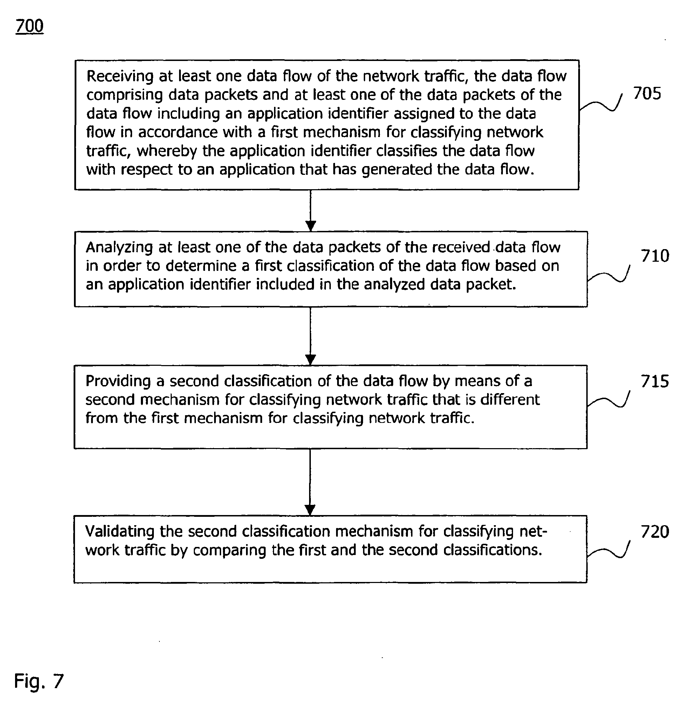

An apparatus realization of network element 420 for validating a mechanism for classifying network traffic, and a method for validating a mechanism for classifying network traffic will be described in the following with regard to the embodiments of Figs. 6 and 7, respectively.

Fig. 6 shows a schematic block diagram illustrating an apparatus 600 for validating a mechanism for classifying network traffic. The apparatus 600 may be the network element 420 shown in Fig. 4 or any another apparatus.

By means of apparatus 600, a second mechanism for network traffic classification may be validated by means of a first (reference) mechanism for network traffic classification. The first mechanism for network traffic classification may be based on at least one of the techniques shown in Figs. 1 to 3 or on any other classification technique.

The apparatus comprises a first function 610 for classifying network traffic, a second function 630 for classifying network traffic and a function 640 for validating the second classification mechanism for classifying network traffic. Both functions 610 and 630 are independent from each other. The functions 610, 630 and 640 may be included in one single network element 420 as shown in Fig. 4 or in distributed network elements.

Network traffic 633 including data packets belonging to data flows are received by apparatus 600 and are independently classified by the first 610 and the second 630 functions for classifying network traffic. Thereafter, the classification results of the first 610 and the second 630 functions for classifying network traffic are validated by means of the function 640 for validating the second classification mechanism for classifying network traffic.

The first function 610 for classifying network traffic comprises a function 615 for receiving at least one data flow of the network traffic. The data flow comprises data packets and at least one of the data packets of the data flow includes an application identifier assigned to the data flow in accordance with the first mechanism for classifying network traffic. The application identifier is classifying the data flow with respect to an application that has generated the data flow. Furthermore, the first function 610 for classifying network traffic comprises a function 620 for analyzing at least one of the data packets of the received data flow in order to determine the first classification of the network traffic based on an application identifier included in the analyzed data packet.

The two different classifications of the network traffic are provided to the function 640 for validating the second classification mechanism for classifying network traffic, as indicated by arrows 645 and 646. Function 640 validates the second classification mechanism for classifying network traffic by comparing the first classification 645 of the network traffic with the second classification 646 of the network traffic. Thus, it can be determined how accurate the second mechanism for classification of network traffic 630 provides classification results.

Fig. 7 shows a flow chart illustrating a method embodiment of a method 700 for validating a mechanism for classifying network traffic. The method 700 may be practiced by the apparatus 600 shown in Fig. 6, the network element 420 shown in Fig. 1 or by other apparatuses.

As shown in Fig. 7, the method starts in step 705 by receiving at least one data flow of the network traffic, whereby the data flow comprises data packets and at least one of the data packets of the data flow includes an application identifier assigned to the data flow in accordance with a first mechanism for classifying network traffic. The application identifier classifies the data flow with respect to an application that has generated the data flow. In a next step 710, at least one of the data packets of the at least one received flow is analyzed in order to provide a first classification of the network traffic. In a further step 715, a second classification of the network traffic is provided by means of a second mechanism for classifying network traffic. Thereafter, as indicated by step 720, the second classification mechanism for classifying network traffic is validated by comparing the first and the second classification of the network traffic.

The second mechanism for classifying network traffic may be based on a passive method for classifying network traffic and the first mechanism for classifying network traffic, which represents a reference method for the second mechanism for classifying network traffic, may be based on an active method for classifying network traffic, e.g. one of the methods shown in Figs. 2 and 3.

The second (passive) mechanism for classifying network traffic may be at least one of complete protocol parsing, a port based classification, a signature based classification, a connection pattern based classification, a statistics based classification, an information theory based classification and a combined classification method. These passive mechanism for classifying network traffic are in the following described in more detail:

In complete protocol parsing, it is intended to analyze and classify all network traffic passing through a measuring point. However, since many network protocols are ciphered due to security reasons, a plurality of applications cannot be determined.

Furthermore, complete protocol parsing is very resource consuming, since all network traffic has to be analyzed.

In port based classification, the classification of network traffic is based on an association of a port number with a specified type of network traffic. For example, World Wide Web traffic may be associated with TCP port 80. Hence, this classification method only needs to access the headers of the data packets. However, this method is not sufficiently reliable in case of dynamically allocated port numbers or tunnelled network traffic.

In signature based classification, only specific byte patterns of the data packets are searched. The byte signatures are predefined so that specific types of network traffic may be identified. For example, eDonkey P2P network traffic contains the specific byte pattern "xe3x38" to be searched. A common feature of signature based classification methods is that in addition to the header of the data packet, its payload also has to be accessed. However, this method provides insufficient results for applications using proprietary network protocols for which no specific byte patterns are known. Furthermore, the byte signatures have to be updated regularly and the method cannot classify encrypted network traffic.

Connection pattern based classification methods are based on the principle of checking the communication patterns generated by a particular host and comparing it with the behaviour patterns representing different activities and/or applications. The patterns describe network traffic flow characteristics corresponding to different applications. The patterns may be obtained by analyzing the relationship between the use of source and destination ports and the relative cardinality of the sets of unique destination ports and IP numbers. Connection pattern based classification methods are described in detail in document "BLINC: Multilevel Traffic Classification in the Dark", in Proc. ACM SIGCOMM, Philadelphia, Pennsylvania, USA, August 2005 by T. Karagiannis, A. Papagiannaki and M. Faloutsos, which is hereby incorporated by reference in its entirety. However, patterns are often difficult to find, especially if multiple application types are used simultaneously. In order to identify a connection pattern in a reliable manner, many data flows coming from and going to a host have to be analyzed.

In statistics based classification methods, statistical features of a network trace are captured and used to classify the network traffic. In order to automatically obtain the relevant features of a specific kind of network traffic, the statistical methods may be combined with methods which are based on artificial intelligence. A Bayesian analysis technique may be employed. The Bayesian analysis technique is described in detail in documents "Traffic Classification on the Fly", volume 36, pages 23-26, New York, N.Y., USA, 2006, ACM Press by L. Bernaille, R. Teixeira, I. Akodkenou, A. Soule, K. Salamatian; "Traffic Classification Using Clustering Algorithms" in Proc. MineNet '06, New York, N.Y., USA, 2006 by J. Erman, M. Arlitt and A. Mahanti; and "Automatic Traffic Classification and Applicaton Identification Using Machine Learning" in Proc. IEEE LCN, Sydney, Australia, November 2005 by S. Zander, T. Nguyen and G. Amitagge, which are hereby incorporated by reference in its entirety. A basic requirement of these classification techniques is hand-classified network traffic which provides training and testing data-sets.

In information theory based classification methods, hosts are grouped into typical behaviour schemes, e.g. servers and attackers. The main idea is to look at the variability of randomness of a set of values that are included in the five-tuple identifiers, which belong to a particular source or destination IP address or a source or destination port. Information theory based classification is described in detail in document "Profiling Internet Backbone Traffic: Behaviour Models and Applications" in Proc. ACM SIGCOMM, Philadelphia, Pennsylvania, USA, August 2005 by K. Xu, Z. Zhang, and S. Bhattacharyya, which is hereby incorporated by reference in its entirety.

Combined classification methods make use of the advantages of different classification methods. Combined classification methods are e.g. described in document "Accurate Traffic Classification", in Proc. IEEE WOWMoM, Helsinki, Finland, June 2007 by G. Szabo, I. Szabo and D. Orincsay, which is hereby incorporated by reference in its entirety.

The present technique for validating a mechanism for classifying network is not limited to the above described passive methods for classifying network traffic. In principle, any method for classifying network traffic, passive or not, can be validated. Combinations of the above passive methods for classification network, also with active methods for classification network, are as well possible.

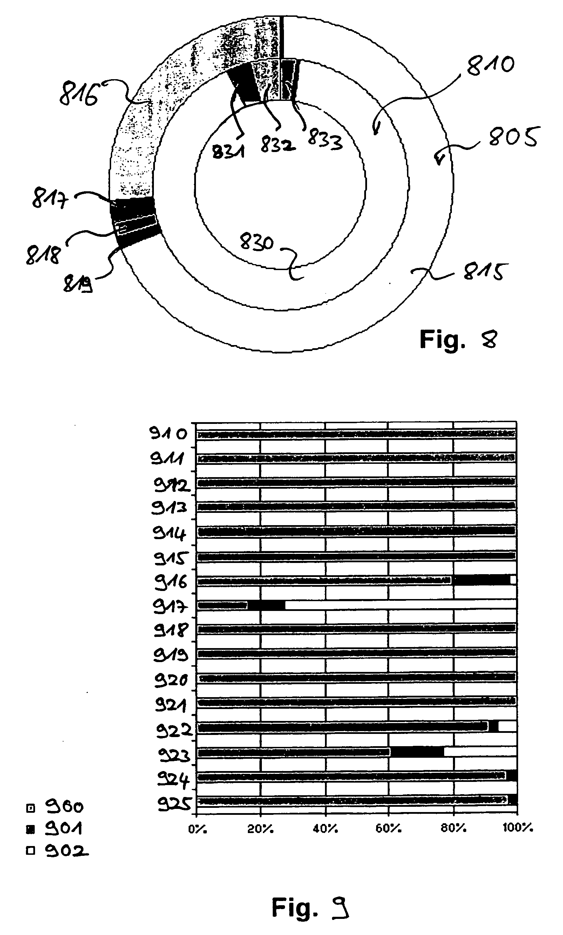

Fig. 8 shows a circle diagram illustrating an exemplary distribution of classified network traffic. The distribution has been obtained by means of a method for classifying network traffic as shown in Fig. 2.

The measurements underlying the classifications took place in a separate access network comprising a plurality of personal computers. All personal computers of the access network independently executed the method for classifying network traffic. The network traffic classification results from all personal computers were thereafter combined in order to provide the distribution of classified network traffic shown in Fig. 8.

The measurements lasted 34 hours. The captured data volume within the measurement time was 6 Gigabytes containing 12 million data packets. The measured data included network traffic from P2P applications including BitTorrent, eDonkey, Gnutella and DirectContact, VoIP and chat applications including Skype and MSN Live, FTP applications, file transfer with a download manager applications, e-mail sending and receiving applications, web based e-mail including Gmail, SSH -based applications, SCP -based applications, FPS and MMORPG gaming applications, streaming radio, streaming video and web based streaming applications. The applications were installed and were running during the measurements on the personal computers.

Fig. 8 shows the distribution of the network traffic in relation to the different applications. The inner circle 810 shows the respective distribution of the flow numbers of the applications and the outer circle 805 shows the respective distribution of the data volume of the applications. Reference number 815 depicts that 70 per cent of the network traffic has been generated by P2P applications. Furthermore, 26 per cent of the network traffic has been generated by World Wide Web applications (reference number 816), 2 per cent of the network traffic has been generated by VoIP applications (reference number 817), 1 per cent of the network traffic has been generated by streaming applications (reference number 818) and 1 per cent of the network traffic has been generated by a secure channel (reference number 819). As regards the flow numbers 810, 91 per cent of the network traffic belongs to P2P applications (reference number 830), 3 per cent of the network traffic belongs to VoIP applications (reference number 831), 4 per cent of the network traffic belongs to World Wide Web applications (reference number 832) and 2 per cent of the network traffic belongs to e-mail applications (reference number 833).

The classification results shown in Fig. 8 have been used for validating a further mechanism for classifying network traffic. In particular, the classification of network traffic shown in Fig. 8 has been compared with a classification of the same network traffic which has been provided by a passive method for classifying network traffic. Fig. 9 shows the result of the validation of a combined passive mechanism for classifying network traffic by means of the (reference) classification result shown in Fig. 8. In particular, the combined passive mechanism for classifying network traffic described in document "Accurate Traffic Classification", in Proc. IEEE WOWMoM, Helsinki, Finland, June 2007 by G. Szabo, I. Szabo and D. Orincsay, which is hereby incorporated by reference, has been used.

In the bar diagram of Fig. 9, a correct classification of network traffic by means of the passive mechanism for classification of network traffic is indicated by shading 900, a miss-classification of network traffic by means of the passive mechanism for classifying network traffic is indicated by shading 901 and network traffic which could not be classified by the passive mechanism for classifying network traffic is indicated by no shading 902.

The bar diagram of Fig. 9 depicts the classification comparison results of e-mail applications in bytes 910 and as data flow 911, file transfer applications in bytes 912 and as data flow 913, gaming applications in bytes 914 and as data flow 915, P2P applications in bytes 916 and as data flow 917, secure channel applications in bytes 918 and as data flow 919, streaming applications in bytes 920 and as data flow 921, VoIP applications in bytes 922 and as data flow 923 and World Wide Web applications in bytes 924 and as data flow 925.

As can be seen from Fig. 9, e-mail, file transfer, gaming, secure channel and gaming applications (bars 910, 911, 912, 913, 914, 915, 918, 919, 920 and 921) have been identified very accurately by the passive mechanism for classifying network traffic. This is due to the fact that these applications use well documented network protocols, open standards and their patterns do not constantly change. For network protocols using encryption, the session initiation phase is critical for the classification of network traffic, since this phase can be identified most accurately. For network protocols such as SSH or SCP, the network traffic can be classified with a full success rate. However, for applications using proprietary protocols, such as e.g. Skype, the classification of network traffic by the passive mechanism for classifying network traffic failed for several data flows.

As can be seen from bars 916 and 917 of Fig. 9, P2P applications have not been classified accurately by the passive mechanism for classifying network traffic. One problem is that P2P applications create a plurality of TCP data flows which are directed to disconnected network peers. This is the primary reason for the large number of unclassified P2P data flows 917. However, the volume of unclassified P2P network traffic is low.

Since there is no payload in P2P data packets, signature based classification methods may as well not have delivered satisfying classification results. The data flows are sent from dynamically allocated source ports to not well known destination ports. Therefore, port based classification methods may as well not have delivered satisfying classification results.

Furthermore, some non-P2P data packets were misclassified into the P2P classification. However, the number of such misclassified data packets is small, both with regard to flow numbers and byte volume.

The constant change of P2P protocols may also cause inaccuracy in the classification of network traffic by passive mechanisms for classifying network traffic. In particular, new features are continuously added to P2P applications. However, the existing mechanisms for classifying network traffic are adapted for classifying specific P2P applications, but not the network protocol which the P2P application is using.

Another problem of classifying network is a matter of philosophy. In particular, there is network traffic which is a derivation of other network traffic. For example, Domain Name Server (DNS) network traffic consists of any network traffic which uses domain names instead of specific IP addresses. However, DNS network traffic may be generated in the World Wide Web by users which do not intend to create DNS network traffic on purpose.

As regards a more complicated case, MSN Live applications use the Hypertext Transfer Protocol (HTTP) for transmitting chat messages. However, such massages do not necessarily have to be considered as World Wide Web traffic. Furthermore, MSN Live applications transmit advertisements by means of the HTTP protocol. However, this network traffic cannot be recognized as deliberate World Wide Web browsing. Therefore, the question arises whether such HTTP network traffic from MSN Live applications, which are classified as World Wide Web traffic, would have to be considered as misclassification, or it is acceptable that they are classified as World Wide Web traffic.

For the present validation to be objective, only such kind of network traffic was considered as properly classified, where the classification outcome and the application generating the network traffic, i.e. the validation outcome, matched. For example, the network traffic generated by a chat application on DirectConnect hubs, which has been classified to be generated by a chat application, could have been considered as being correctly classified. However, for the present objective validation, it has been marked as a misclassification.

The high correct classification ratio of VoIP network traffic (see bars 922 and 923 in Fig. 9) results from the successful identification of network traffic generated by MSN Live and Skype applications. Network traffic generated by Skype is generally difficult to identify, since Skype uses a proprietary network protocol designed to ensure secure network communication. However, Skype sends data packets, even in case there is no ongoing call, with an interval of exactly 20 seconds. Therefore, network traffic generated by Skype may as well be correctly classified by means of an extension of the passive mechanism for classifying network traffic.

The present technique for classifying network traffic may not only be used for validating a mechanism for classifying network traffic. The technique may as well be used for online network traffic classification at a measurement site. This may include that all terminal devices accessing a communication network comprise a proposed driver component. Furthermore, the driver component may be designed tamper-proof so that a user cannot manipulate his terminal device in a way that the classification of network traffic can be forged. A respective online classification method may be used for online clustering of network traffic into quality of service (QoS) classes based on the resource requirements of the applications generating the network traffic.

The technique could also be used by network operators to charge on the basis of the applications utilized by the user. Furthermore, the technique for classifying network could be extended by including further information about the application generating the network traffic, e.g. the version number, into the data packets so that network operators may track the security risks of specific applications.

The present technique of validating a mechanism for classifying network traffic is deterministic. This means, the technique does not rely any probabilistic decisions. It may be used for creating firewalls, sniffers, traffic meters or network analyzers.

Each data packet classified by the present technique of classifying network traffic provides reference information that can be compared with the result of the mechanism for classifying network traffic to be validated.

The present technique of validating a mechanism for classifying network traffic is independent from known network traffic classification methods. In other words, the validation of one mechanism for classifying network traffic by another known mechanism for classifying network traffic is avoided. Thereby, validation results having a higher accuracy are provided. Furthermore, by means of the present techniques, it is possible to perform network traffic classifications including a high amount of network traffic to be classified in a highly automated way.

Moreover, the present techniques for classifying network traffic and for validating a mechanism for classifying network traffic may be employed in a realistic network environment. The techniques provide validation results based on realistic network traffic mixtures and provide a highly automated and reliably validation of network traffic classifications.

Although embodiments of the present invention have been illustrated in the accompanying drawings and described in the description, it will be understood that the invention is not limited to the embodiments disclosed herein. In particular, the invention is capable of numerous rearrangements, modifications and substitutions without departing from the scope of the invention as set forth and defined by the following claims.

## Claims

1. A method (200, 700) for applying a first classification mechanism for classifying network traffic in the form of data packets generated by multiple applications installed on a terminal device (100), and validating a second classification mechanism for classifying data flows installed on an apparatus (600) of a network, the method comprising the following steps
performing the first classification mechanism in the terminal device (100) by
- receiving (205) data packets belonging to one or more data flows, each data flow including the data packets generated by a specific one of the multiple applications; **characterized by**:
- analyzing (210) the received data packets to identify the application associated with each analyzed data packet by assessing a data flow-specific identifier, the application identifier, associated with a received data packet and determining (340), based on the data flow-specific identifier, whether information regarding the application that has generated the analyzed data packet is available in a local memory,
- classifying (215) at least one data flow by including data flow-specific identifier in at least one of the analyzed data packets of this data flow,
- determining (315) whether a received data packet is an outgoing or an incoming data packet and excluding (317) the received data packet at least from the classifying step in case the received data packet is an incoming data packet; and
performing the validating of the second classification mechanism for classifying data flows in an apparatus (600) of the network by
- receiving (705) at least one data flow of the network traffic, the data flow comprising data packets and at least one of the data packets of the data flow including the data flow-specific identifier assigned to the data flow in accordance with the first mechanism for classifying (200) network traffic, data flow-specific identifier classifying the data flow with respect to an application that has generated the data flow;
- analyzing (710) at least one of the data packets of the received data flow in order to determine the first classification of the data flow based on the data flow-specific identifier included in the analyzed data packet;
- providing (715) a second classification of the data flow by means of a second mechanism for classifying network traffic that is different from the first mechanism for classifying network traffic; and
- validating (720) the second classification mechanism for classifying network traffic by comparing the first and the second classifications.

2. The method of claim 1, wherein the multiple applications comprise at least one of a Peer-to-Peer, P2P, application, a Voice over Internet Protocol, VoIP, application, a chat application, a File Transfer Protocol, FTP, application, an e-mail application, a Secure Shell, SSH, application, a Session Control Protocol, SCP, application, a gaming application and a streaming application.

3. The method of claim 1, wherein the analyzing 210 of the received data packets and the classifying 215 of the at least one data flow is performed by means of a network driver component.

4. The method of one of the preceding claims, further comprising the steps of:
- determining (320) the size of a received data packet; and
- excluding (319) the data packet at least from the classifying step in case its size exceeds a predetermined value.

5. The method of one of the preceding claims, further comprising the steps of:
- determining (325) a network protocol with which a received data packet is associated; and
- excluding (335) the data packet at least from the classifying step in case the data packet is not associated with at least one predetermined network protocol.

6. The method of one of claims 1 to 5, further comprising the step of:
- requesting (345) at least one of a network number and a process ID associated with the analyzed data packet in case no information regarding the application that has generated the analyzed data packet is available in the local memory.

7. The method of claim 6, wherein the process ID is associated with an application that has generated the analyzed data packet.

8. The method of one of the preceding claims, wherein the step of including (215) the data flow-specific identifier in at least one of the analyzed data packets of the data flow comprises at least one of including data flow-specific identifiers in all analyzed data packets of the data flow, including a data flow-specifc identifier only in the first analyzed data packet of the data flow, and randomly including data flow-specific identifiers in analyzed data packets of the data flow.

9. The method of one of the preceding claims, wherein the data flow-specific identifier is included in an option field of the analyzed data packet which is transparent within the network.

10. A computer program product including program code portions for performing the method steps according to one of claims 1 to 9 when the computer program product is run on one or more components of a network.

11. A system comprising a terminal device (100) for classifying network traffic in the form of data packets generated by multiple applications installed on the device (100), and an apparatus (600) for validating a second classification mechanism for classifying data flows installed on the apparatus (600) of a network **characterized by** comprising:
- a part of a network driver component (130) in the terminal device (100) adapted to perform a function (135) for receiving data packets belonging to one or more data flows, each data flow including the data packets generated by a specific one of the multiple applications; **characterized by**:
- another part of the network driver component (130) in the terminal device (100) adapted to perform a function (140) for analyzing the received data packets to identify the application associated with each analyzed data packet; and
- a further part of the network driver component (130) in the terminal device (100) adapted to perform a function (145) for classifying at least one data flow by including an data flow-specific identifier in at least one of the analyzed data packets of this data flow, wherein
- the part of the network driver component (130) adapted to perform the function (140) for analyzing the received data packets is adapted to assess a data flow-specific identifier associated with a received data packet, and to determine, based on the data flow-specific identifier, whether information regarding the application that has generated the analyzed data packet is available in a local memory, and
- the further part of the network driver component (130) adapted to perform the function (145) for classifying at least one data flow is adapted to determine whether a received data packet is an outgoing or an incoming data packet and to exclude the received data packet at least from the classifying step in case the received data packet is an incoming data packet; and
the apparatus (600) of the network is adapted to perform the validation of the second classification mechanism for classifying data flows in which
- a part of the apparatus (600) is adapted to perform a function (615) for receiving at least one data flow of the network traffic, the data flow comprising data packets and at least one of the data packets of the data flow including a data flow-specific identifier assigned to the data flow in accordance with a first mechanism for classifying network traffic, the data flow-specific identifier classifying the data flow with respect to an application that has generated the data flow;
- another part of the apparatus (600) is adapted to perform a function (620) for analyzing at least one of the data packets of the at least one received data flow in order to determine a first classification of the data flow based on a data flow-specific identifier included in the analyzed data packet;
- a further part of the apparatus (600) is adapted to perform a function (630) for providing a second classification of the data flow by means of a second mechanism for classifying network traffic that is different from the first mechanism for classifying network traffic; and
- another further part of the apparatus (600) is adapted to perform a function (640) for validating the second classification mechanism for classifying network traffic by comparing the first and the second classifications.

12. The system of claim 11 further comprising a network driver component (130) which is adapted to perform the function (140) for analyzing the received data packets and the function (145) for classifying at least one data flow.

13. The system of one of claims 11 or 12, wherein the network driver component (130) which is adapted to perform the function (140) for analyzing the received data packets and the function (145) for classifying at least one data flow performs the functions in a protocol layer below an IP layer.

14. The system of claim 11, wherein the parts adapted to perform the function (615) for receiving at least one data flow, the function (620) for analyzing at least one of the data packets, the function (630) for providing a second classification of the data flow and the function (640) for validating the second Classification mechanism are included in a single network element.

## Patentansprüche

1. Verfahren (200, 700) zum Anwenden eines ersten Klassifizierungsmechanismus zum Klassifizieren von Netzverkehr in der Form von Datenpaketen, die durch mehrere Anwendungen erzeugt werden, die auf einem Endgerät (100) installiert sind, und Validieren eines zweiten Klassifizierungsmechanismus zum Klassifizieren von Datenflüssen, der auf einer Vorrichtung (600) eines Netzwerks installiert ist, wobei das Verfahren die folgenden Schritte umfasst:
Ausführen des ersten Klassifizierungsmechanismus im Endgerät (100) durch
- Empfangen (205) von Datenpaketen, die zu einem oder mehreren Datenflüssen gehören, wobei jeder Datenfluss die Datenpakete umfasst, die durch eine spezifische der mehreren Anwendungen erzeugt werden, **gekennzeichnet durch**:
- Analysieren (210) der empfangenen Datenpakete, um die Anwendung, die mit jedem analysierten Datenpaket assoziiert ist, **durch** Beurteilen einer datenflussspezifischen Kennung, der Anwendungskennung, zu identifizieren, die mit einem empfangenen Datenpaket assoziiert ist, und Bestimmen (340) basierend auf der datenflussspezifischen Kennung, ob Informationen bezüglich der Anwendung, welche das analysierte Datenpaket erzeugt hat, in einem lokalen Speicher verfügbar sind,
- Klassifizieren (215) mindestens eines Datenflusses **durch** Aufnehmen der datenflussspezifischen Kennung in mindestens eines der analysierten Datenpakete dieses Datenflusses,
- Bestimmen (315), ob ein empfangenes Datenpaket ein abgehendes oder ein eingehendes Datenpaket ist, und Ausschließen (317) des empfangenen Datenpakets wenigstens vom Klassifizierungsschritt, falls das empfangene Datenpaket ein eingehendes Datenpaket ist; und
Durchführen der Validierung des zweiten Klassifizierungsmechanismus zum Klassifizieren von Datenflüssen in einer Vorrichtung (600) des Netzwerks durch:
- Empfangen (705) mindestens eines Datenflusses des Netzverkehrs, wobei der Datenfluss Datenpakete umfasst, und mindestens eines der Datenpakete des Datenflusses die datenflussspezifische Kennung umfasst, die dem Datenfluss gemäß dem ersten Mechanismus zum Klassifizieren (200) von Netzverkehr zugeordnet wurde, wobei die datenflussspezifische Kennung den Datenfluss in Bezug auf eine Anwendung klassifiziert, die den Datenfluss erzeugt hat;
- Analysieren (710) mindestens eines der Datenpakete des empfangenen Datenflusses, um die erste Klassifizierung des Datenflusses basierend auf der datenflussspezifischen Kennung zu bestimmen, die im analysierten Datenpaket enthalten ist;
- Bereitstellen (715) einer zweiten Klassifizierung des Datenflusses **durch** einen zweiten Mechanismus zum Klassifizieren von Netzverkehr, der vom ersten Mechanismus zum Klassifizieren von Netzverkehr verschieden ist; und
- Validieren (720) des zweiten Klassifizierungsmechanismus zum Klassifizieren von Netzverkehr **durch** Vergleichen der ersten und zweiten Klassifizierungen.

2. Verfahren nach Anspruch 1, wobei die mehreren Anwendungen mindestens eine von einer Partner-zu-Partner- bzw. P2P-Anwendung, einer Sprachübertragungper-Internet-Protokoll- bzw. VoIP-Anwendung, einer Chat-Anwendung, einer Dateiübertragungsprotokoll- bzw. FTP-Anwendung, einer E-Mail-Anwendung, einer Secure Shell- bzw. SSH-Anwendung, einer Sitzungssteuerungsprotokoll- bzw. SCP-Anwendung, einer Spieleanwendung und einer Echtzeitübertragungsanwendung umfassen.

3. Verfahren nach Anspruch 1, wobei das Analysieren 210 der empfangenen Datenpakete und das Klassifizieren 215 des mindestens einen Datenflusses durch eine Netzwerk-Treiberkomponente erfolgt.

4. Verfahren nach einem der vorhergehenden Ansprüche, ferner umfassend die folgenden Schritte:
- Bestimmen (320) der Größe eines empfangenen Datenpakets; und
- Ausschließen (319) des Datenpakets wenigstens vom Klassifizierungsschritt, falls seine Größe einen vorgegebenen Wert überschreitet.

5. Verfahren nach einem der vorhergehenden Ansprüche, ferner umfassend die folgenden Schritte:
- Bestimmen (325) eines Netzprotokolls, mit dem das empfangene Datenpaket assoziiert ist; und
- Ausschließen (335) des Datenpakets wenigstens vom Klassifizierungsschritt, falls das Datenpaket nicht mit mindestens einem vorgegebenen Netzprotokoll assoziiert ist.

6. Verfahren nach einem der Ansprüche 1 bis 5, ferner umfassend den folgenden Schritt:
- Anfordern (345) mindestens einer Netzwerknummer und einer Prozess-ID, die mit dem analysierten Datenpaket assoziiert ist, falls keine Informationen bezüglich der Anwendung, die das analysierte Datenpaket erzeugt hat, im lokalen Speichern verfügbar sind.

7. Verfahren nach Anspruch 6, wobei die Prozess-ID mit einer Anwendung assoziiert ist, die das analysierte Datenpaket erzeugt hat.

8. Verfahren nach einem der vorhergehenden Ansprüche, wobei der Schritt des Aufnehmens (215) der datenflussspezifischen Kennung in mindestens eines der analysierten Datenpakete des Datenflusses mindestens eines von einem Aufnehmen von datenflussspezifischen Kennung in alle analysierten Datenpakete des Datenflusses, Aufnehmen einer datenflussspezifischen Kennung nur in das erste analysierte Datenpaket des Datenflusses und zufallsmäßiges Aufnehmen von datenflussspezifischen Kennungen in analysierte Datenpakete des Datenflusses umfasst.

9. Verfahren nach einem der vorhergehenden Ansprüche, wobei die datenflussspezifische Kennung in ein Optionsfeld des analysierten Datenpakets aufgenommen wird, welches innerhalb des Netzwerks transparent ist.

10. Computerprogrammprodukt, umfassend Programmcodeabschnitte zum Ausführen der Verfahrensschritte nach einem der Ansprüche 1 bis 9, wenn das Computerprogrammprodukt auf einer oder mehreren Komponenten eines Netzwerks ausgeführt wird.

11. System, umfassend ein Endgerät (100) zum Klassifizieren von Netzverkehr in der Form von Datenpaketen, die durch mehrere Anwendungen erzeugt werden, die auf dem Gerät (100) installiert sind, und eine Vorrichtung (600) zum Validieren eines zweiten Klassifizierungsmechanismus zum Klassifizieren von Datenflüssen, der auf der Vorrichtung (600) eines Netzwerks installiert ist, **dadurch gekennzeichnet, dass** es umfasst:
- einen Teil einer Netzwerk-Treiberkomponente (130) im Endgerät (100), der zum Ausführen einer Funktion (135) zum Empfangen von Datenpaketen, die zu einem oder mehreren Datenflüssen gehören, ausgelegt ist, wobei jeder Datenfluss die Datenpakete umfasst, die durch eine spezifische der mehreren Anwendungen erzeugt werden, **gekennzeichnet durch**:
- einen anderen Teil der Netzwerk-Treiberkomponente (130) im Endgerät (100), der zum Ausführen einer Funktion (140) zum Analysieren der empfangenen Datenpakete ausgelegt ist, um die Anwendung zu identifizieren, die mit jedem analysierten Datenpaket assoziiert ist; und
- einen weiteren Teil der Netzwerk-Treiberkomponente (130) im Endgerät (100), der zum Ausführen einer Funktion (145) zum Klassifizieren mindestens eines Datenflusses durch Aufnehmen einer datenflussspezifischen Kennung in mindestens eines der analysierten Datenpakete dieses Datenflusses ausgelegt ist, wobei
- der Teil der Netzwerk-Treiberkomponente (130), der zum Ausführen der Funktion (140) zum Analysieren der empfangenen Datenpakete, zum Beurteilen einer datenflussspezifischen Kennung, die mit einem empfangenen Datenpaket assoziiert ist, und Bestimmen, ob Informationen bezüglich der Anwendung, die das analysierte Datenpaket erzeugt hat, in einem lokalen Speicher verfügbar sind, basierend auf der datenflussspezifischen Kennung ausgelegt ist, und
- der weitere Teil der Netzwerk-Treiberkomponente (130), der zum Ausführen der Funktion (145) zum Klassifizieren mindestens eines Datenflusses ausgelegt ist, zum Bestimmen, ob ein empfangenes Datenpaket ein abgehendes oder ein eingehendes Datenpaket ist, und Ausschließen des empfangenen Datenpakets wenigstens vom Klassifizierungsschritt ausgelegt ist, falls das empfangene Datenpaket ein eingehendes Datenpaket ist; und
die Vorrichtung (600) des Netzwerks zum Durchführen einer Validierung des zweiten Klassifizierungsmechanismus zum Klassifizieren von Datenflüssen ausgelegt ist, wobei
- ein Teil der Vorrichtung (600) zum Ausführen einer Funktion (615) zum Empfangen mindestens eines Datenflusses des Netzverkehrs ausgelegt ist, wobei der Datenfluss Datenpakete umfasst, und mindestens eines der Datenpakete des Datenflusses eine datenflussspezifische Kennung umfasst, die dem Datenfluss gemäß einem ersten Mechanismus zum Klassifizieren von Netzverkehr zugeordnet wurde, wobei die datenflussspezifische Kennung den Datenfluss in Bezug auf eine Anwendung klassifiziert, die den Datenfluss erzeugt hat;
- ein anderer Teil der Vorrichtung (600) zum Ausführen eines Funktion (620) zum Analysieren mindestens eines der Datenpakete des mindestens einen empfangenen Datenflusses ausgelegt ist, um eine erste Klassifizierung des Datenflusses basierend auf einer datenflussspezifischen Kennung zu bestimmen, die im analysierten Datenpaket enthalten ist;
- ein weiterer Teil der Vorrichtung (600) zum Ausführen einer Funktion (630) zum Bereitstellen einer zweiten Klassifizierung des Datenflusses durch einen zweiten Mechanismus zum Klassifizieren von Netzverkehr ausgelegt ist, der vom ersten Mechanismus zum Klassifizieren von Netzverkehr verschieden ist; und
- ein anderer Teil der Vorrichtung (600) zum Ausführen einer Funktion (640) zum Validieren des zweiten Klassifizierungsmechanismus zum Klassifizieren von Netzverkehr **durch** Vergleichen der ersten und zweiten Klassifizierungen ausgelegt ist.

12. System nach Anspruch 11, ferner umfassend eine Netzwerk-Treiberkomponente (130), die zum Ausführen der Funktion (140) zum Analysieren der empfangenen Datenpakete und der Funktion (145) zum Klassifizieren mindestens eines Datenflusses ausgelegt ist.

13. System nach Anspruch 11 oder 12, wobei die Netzwerk-Treiberkomponente (130), die zum Ausführen der Funktion (140) zum Analysieren der empfangenen Datenpakete und der Funktion (145) zum Klassifizieren mindestens eines Datenflusses ausgelegt ist, die Funktionen in einer Protokollschicht unter einer IP-Schicht ausführt.

14. System nach Anspruch 11, wobei die Teile, die zum Ausführen der Funktion (615) zum Empfangen mindestens eines Datenflusses, der Funktion (620) zum Analysieren mindestens eines der Datenpakete, der Funktion (630) zum Bereitstellen einer zweiten Klassifizierung des Datenflusses und der Funktion (640) zum Validieren des zweiten Klassifizierungsmechanismus ausgelegt sind, in einem einzigen Netzelement enthalten sind.

## Revendications

1. Procédé (200,700) pour appliquer un premier mécanisme de classification pour classifier le trafic de réseau sous la forme de paquets de données générés par des applications multiples installées sur un dispositif de terminal (100), et valider un second mécanisme de classification pour classifier des flux de données installés sur un dispositif (600) d'un réseau, le procédé comprenant les étapes suivantes
effectuer le premier mécanisme de classification dans le dispositif de terminal (100) en
- recevant (205) des paquets de données appartenant à un ou des flux de données, chaque flux de données incluant les paquets de données générés par une application spécifique des applications multiples ; **caractérisé par**
- analyser (210) les paquets de données reçus pour identifier l'application associée à chaque paquet de données analysé en estimant un identifiant spécifique au flux de données, l'identifiant d'application associé à un paquet de données reçu et déterminer (340), sur la base de l'identifiant spécifique au flux de données, si l'information concernant l'application qui a généré le paquet de données analysé est disponible dans une mémoire,
- classifier (215) au moins un flux de données en incluant l'identifiant spécifique au flux de données dans au moins un des paquets de données analysés de ce flux de données,
- déterminer (315) si un paquet de données reçu est un paquet de données sortant ou entrant et exclure (317) le paquet de données reçu au moins de l'étape de classification au cas où le paquet de données reçu est un paquet de données entrant ; et
effectuer la validation du second mécanisme de classification pour classifier des flux de données dans un dispositif (600) du réseau en
- recevant (705) au moins un flux de données du trafic de réseau, le flux de données comprenant des paquets de données et au moins un des paquets de données du flux de données incluant l'identifiant spécifique au flux de données assigné au flux de données conformément au premier mécanisme pour classifier (200) le trafic de réseau, l'identifiant spécifique au flux de données classifiant le flux de données par rapport à une application qui a généré le flux de données ;
- analysant (710) au moins un des paquets de données du flux de données reçu de manière à déterminer la première classification du flux de données sur la base de l'identifiant spécifique au flux de données inclus dans le paquet de données analysé ;
- fournissant (715) une seconde classification du flux de données au moyen d'un second mécanisme pour classifier le trafic de réseau qui est différent du premier mécanisme pour classifier le trafic de réseau ; et
- validant (720) le second mécanisme de classification pour classifier le trafic de réseau en comparant la première et la seconde classification.

2. Procédé selon la revendication 1, dans lequel les applications multiples comprennent au moins une d'une application air à pair, P2P, une application de protocole voix sur Internet, VoIP, une application de chat, une application de protocole de transfert de fichiers, FTP, une application e-mail, une application Secure Shell, SSH, une application de protocole de commande de session, SCP, une application de jeu en ligne et une application de diffusion multimédia en continu.

3. Procédé selon la revendication 1, dans lequel l'analyse 210 des paquets de données reçus et la classification 215 d'au moins un flux de données est effectuée au moyen d'un composant de pilote de réseau.

4. Procédé selon une des revendications précédentes, comprenant en outre les étapes consistant à :
- déterminer (320) la taille d'un paquet de données reçu ; et
- exclure (319) le paquet de données au moins de l'étape de classification au cas où sa taille excède une valeur prédéterminée.

5. Procédé selon une des revendications précédentes, comprenant en outre les étapes consistant à :
- déterminer (325) un protocole de réseau auquel un paquet de données reçu est associé ; et
- exclure (335) le paquet de données au moins de l'étape de classification au cas où le paquet de données n'est pas associé à au moins un protocole de réseau prédéterminé.

6. Procédé selon une des revendications 1 à 5, comprenant en outre l'étape consistant à ;
- demander (345) au moins un d'un numéro de réseau et un ID de processus associés au paquet de données analysé au cas où aucune information concernant l'application qui a généré le paquet de données analysé n'est disponible dans la mémoire locale.

7. Procédé selon la revendication 6, dans lequel l'ID de processus est associé à une application qui a généré le paquet de données analysé.

8. Procédé selon une des revendications précédentes, dans lequel l'étape d'inclusion (215) de l'identifiant spécifique au flux de données dans au moins un des paquets de données analysés du flux de données comprend au moins un de l'inclusion d'identifiants spécifiques au flux de données dans tous les paquets de données analysés du flux de données, l'inclusion d'un identifiant spécifique au flux de données seulement dans le premier paquet de données analysé du flux de données, et l'inclusion aléatoire d'identifiants spécifiques au flux de données dans les paquets de données analysés du flux de données.

9. Procédé selon une des revendications précédentes, dans lequel l'identifiant spécifique au flux de données est inclus dans un champ d'option du paquet de données analysé qui est transparent à l'intérieur du réseau.

10. Produit de programme informatique incluant des portions de code de programme pour effectuer les étapes de procédé selon une des revendications 1 à 9 quand le produit de programme informatique est exécuté sur un ou plusieurs composants d'un réseau.

11. Système comprenant un dispositif de terminal (100) pour classifier le trafic de réseau sous la forme de paquets de données générés par des applications multiples installées sur le dispositif (100), et un dispositif (600) pour valider un second mécanisme de classification pour classifier les flux de données installés sur le dispositif (600) d'un réseau **caractérisé en ce qu'**il comprend :
- une partie d'un composant de pilote de réseau (130) dans le dispositif de terminal (100) adapté pour mettre en oeuvre une fonction (135) pour recevoir des paquets de données appartenant à un ou plusieurs flux de données, chaque flux de données incluant les paquets de données générés par une application spécifique des applications multiples ; **caractérisé par** :
- une autre partie du composant de pilote de réseau (130) dans le dispositif de terminal (100) adaptée pour mettre en oeuvre une fonction (140) pour analyser les paquets de données reçus afin d'identifier l'application associée à chaque paquet de données analysé ; et
- une autre partie du composant de pilote de réseau (130) dans le dispositif de terminal (100) adaptée pour mettre en oeuvre une fonction (145) pour classifier au moins un flux de données en incluant un identifiant spécifique au flux de données dans au moins un des paquets de données analysés de ce flux de données, dans lequel
- la partie du composant de pilote de réseau (130) adaptée pour mettre en oeuvre la fonction (140) pour analyser les paquets de données reçus est adaptée pour estimer un identifiant spécifique au flux de données associé à un paquet de données reçu et pour déterminer, sur la base de l'identifiant spécifique au flux de données, si l'information concernant l'application qui a généré le paquet de données analysé est disponible dans une mémoire locale, et
- l'autre partie du composant de pilote de réseau (130) adaptée pour effectuer la fonction (145) pour classifier au moins un flux de données est adaptée pour déterminer si un paquet de données reçu est un paquet de données sortant ou entrant et pour exclure le paquet de données reçu au moins de l'étape de classification au cas où le paquet de données reçu est un paquet de données entrant ; et
le dispositif (600) du réseau est adapté pour effectuer la validation du second mécanismede classification pour classifier les flux de données dans lequel
- une partie du dispositif (600) est adaptée pour effectuer une fonction (615) pour recevoir au moins un flux de données du trafic de réseau, le flux de données comprenant des paquets de données et au moins un des paquets de données du flux de données incluant un identifiant spécifique au flux de données assigné au flux de données conformément à un premier mécanisme pour classifier le trafic de réseau, l'identifiant spécifique au flux de données classifiant le flux de données par rapport à une application qui a généré le flux de données ;
- une autre partie du dispositif (600) est adaptée pour effectuer une fonction (620) pour analyser au moins un des paquets de données d'au moins un flux de données reçu de manière à déterminer une première classification du flux de données sur la base d'un identifiant spécifique au flux de données inclus dans le paquet de données analysé ;
- une autre partie du dispositif (600) est adaptée pour effectuer une fonction (630) pour fournir une seconde classification du flux de données au moyen d'un second mécanisme pour classifier le trafic de réseau qui est différent du premier mécanisme pour classifier le trafic de réseau ; et
- encore une autre partie du dispositif (600) est adaptée pour effectuer une fonction (640) pour valider le second mécanisme de classification pour classifier le trafic de réseau en comparant la première et la seconde classification.

12. Système selon la revendication 11, comprenant en outre un composant de pilote de réseau (130) qui est adapté pour effectuer la fonction (140) pour analyser les paquets de données reçus et la fonction (145) pour classifier au moins un flux de données.

13. Système selon une des revendications 11 ou 12, dans lequel le composant de pilote de réseau (130) qui est adapté pour effectuer la fonction (140) pour analyser les paquets de données reçus et la fonction (145) pour classifier au moins un flux de données effectue les fonctions dans une couche de protocole au-dessous d'une couche IP.

14. Système selon la revendication 11, dans lequel les parties adaptées pour effectuer la fonction (615) pour recevoir au moins un flux de données, la fonction (620) pour analyser au moins un des paquets de données, la fonction (630) pour fournir une seconde classification du flux de données et la fonction (640) pour valider le second mécanisme de classification sont inclus dans un élément de réseau unique.
